# EUROPEAN PATENT APPLICATION

(11) **EP 2 051 538 A1**
(43) Date of publication of application: **22.04.2009**
(21) Application number: 07800970.1
(22) Date of filing: 15.08.2007
(51) Int. Cl.: H04Q 7/32

(54) **MOBILE RECEIVING DEVICE, METHOD AND MEDIA STREAM SELECTING DEVICE**

(30) Priority: 19.10.2006 CN 200610149968
(71) Applicant: Huawei Technologies Co., Ltd., Longgang District, Shenzhen Guangdong 518129 (CN)
(72) Inventor: ZUO, Minglei, Shenzhen Guangdong 518129 (CN)
(74) Representative: Körber, Martin Hans
(86) International application number: PCT/CN2007/070494
(87) International publication number: WO 2008/046324

(57) **Abstract**

A mobile receiving device includes: a first interface data processing unit, adapted to extract a first media stream signal from a first interface; a second interface data processing unit, adapted to extract a second media stream signal from a second interface; and a selector, adapted to select one of the first media stream signal and the second media stream signal for output. A mobile receiving method and device use a timestamp and a frame sequence number during the switching to maintain the continuity of frames and implement seamless switching, thus ensuring that the mobile receiving device can always receive multimedia broadcast signals with better quality in the indoor or outdoor environment.

## Description

### Field of the Invention

The present invention relates to mobile multimedia technologies, and in particular, to a mobile receiving device, a mobile receiving method and a device for selecting media streams.

### Background of the Invention

With the advancement of digital media contents, former analog broadcast and television programs are already digitized. Mobile TV devices are mini handheld terminals that are used to receive TV and other audio and video programs. Mobile TV devices enable people to watch their favorite programs at any place. The mobile TV service is now a new service model of wide concern. Currently, mobile TV technologies are implemented in the following two modes: digital broadcast mode and broadband IP network-based streaming media mode.

More than ten mobile TV technologies in the digital broadcast mode are already available. These technologies may be categorized into the following three types: mobile TV technology based on a mobile broadcast network, mobile TV technology based on a terrestrial digital broadcast network, and satellite-based mobile TV technology.

In the prior art, a mobile TV receiving device based on digital broadcast mode works as follows: an antenna receives signals from a digital broadcast signal source; after the signals are demodulated, a media playing module plays the demodulated signals. In applications, the mobile TV receiving device based on digital broadcast may be:
1. A notebook computer. A typical example is digital video broadcast-handheld (DVB-H) receiving.
2. A mobile phone, that is, mobile TV, including DVB-H and terrestrial digital multimedia broadcast (T-DMB).
3. A dedicated device, mainly including DVB-H and T-DMB.

With the popularity of broadband IP networks, a lot of telecom operators implement TV services based on broadband IP network streaming media technology. The TV services are implemented as follows: a mobile TV receiving device accesses a broadband IP network through the Ethernet or wireless local area network (WLAN); the mobile TV receiving device sets up a connection with a specified content server, receives streaming media data from the specified content server, and plays the streaming media data. The specified content server stores real-time broadcast program contents.

Radio digital broadcast can achieve a good signal coverage in an outdoor environment. Nevertheless, it has poor penetration and signal quality in an indoor environment. When the mobile TV receiving device moves from the outdoor environment to the indoor environment, signals may be interrupted, become poorer or have a higher bit error ratio. This causes interruption and discontinuity of frames and mosaic effects to the mobile TV receiving device, thus bringing poor visual experiences to the user.

Most buildings have indoor broadband IP network access capabilities. Thus, the mobile TV receiving device can access a broadband IP network through a WLAN access point (AP) and receive multimedia broadcast signals through the broadband IP network. However, the broadband IP network can cover only the indoor environment and cannot meet the massive application requirements of the TV receiving device based on IP network streaming media technology in the outdoor environment.

It is apparent that neither the radio digital broadcast nor the broadband IP network can ensure a good signal overage in both the indoor and outdoor environments. The mobile TV receiving device in the prior art can use only one receiving mode in the indoor environment and outdoor environment. Thus, the mobile TV receiving device cannot receive good signals in the indoor environment and outdoor environment at the same time.

### Summary of the Invention

A mobile receiving device provided in an embodiment of the present invention includes:
a first interface data processing unit, adapted to extract a first media stream signal from a first interface;
a second interface data processing unit, adapted to extract a second media stream signal from a second interface; and
a selector, adapted to select one of the first media stream signal and the second media stream signal for output.

A mobile receiving method provided in an embodiment of the present invention includes:
extracting a first media stream signal from radio digital broadcast signals and a second media stream signal from IP-based data stream signals; and
selecting one of the extracted media stream signals for output.

A device for selecting media streams provided in an embodiment of the present invention includes:
a selector, adapted to receive a first media stream signal extracted from radio digital broadcast signals and a second media stream signal extracted from IP-based data stream signals, and select one of the media stream signals for output.

In an embodiment of the present invention, the mobile receiving device combines the mobile TV technology based on digital broadcast and the streaming media technology based on broadband IP network. This ensures that the mobile receiving device can always receive good multimedia broadcast signals in the indoor or outdoor environment. The receiving method provided in an embodiment of the present invention is implemented on the mobile receiving device. This method uses a timestamp and a frame sequence number to maintain the continuity of pictures and implement seamless switching of frames, so that the user can watch programs without any interruption.

### Brief Description of the Drawings

Figure 1 shows a structure of a mobile receiving device in a first exemplary embodiment of the present invention;

Figure 2 shows a structure of a mobile receiving device in a second exemplary embodiment of the present invention;

Figure 3 shows a flowchart of a receiving method that is implemented on the mobile receiving device provided in an embodiment of the present invention;

Figure 4 shows a structure of a radio digital broadcast processing unit in an exemplary embodiment of the present invention; and

Figure 5 shows a structure of a radio digital broadcast processing unit in another exemplary embodiment of the present invention.

### Detailed Description of the Embodiments

For better understanding of the objective, technical solution and merits of the present invention, the present invention is hereinafter described in detail with reference to the accompanying drawings and exemplary embodiments.

Embodiments of the present invention combine the streaming media technology based on broadband IP network and the mobile TV technology based on radio digital broadcast. A selector, a first interface data processing unit, and a second interface data processing unit are configured in a mobile receiving device. In an embodiment of the present invention, the first interface data processing unit is a radio digital broadcast processing unit, and the second interface data processing unit is an IP streaming media processing unit. These two units extract media stream signals from the received signals and output the media stream signals to the selector. The selector selects a media stream signal with better quality for output. The mobile receiving device is a dual-mode mobile receiving device, for example, a mobile TV receiving device. The signal source is a radio digital broadcast signal source and an IP network. The IP network is a broadband IP network.

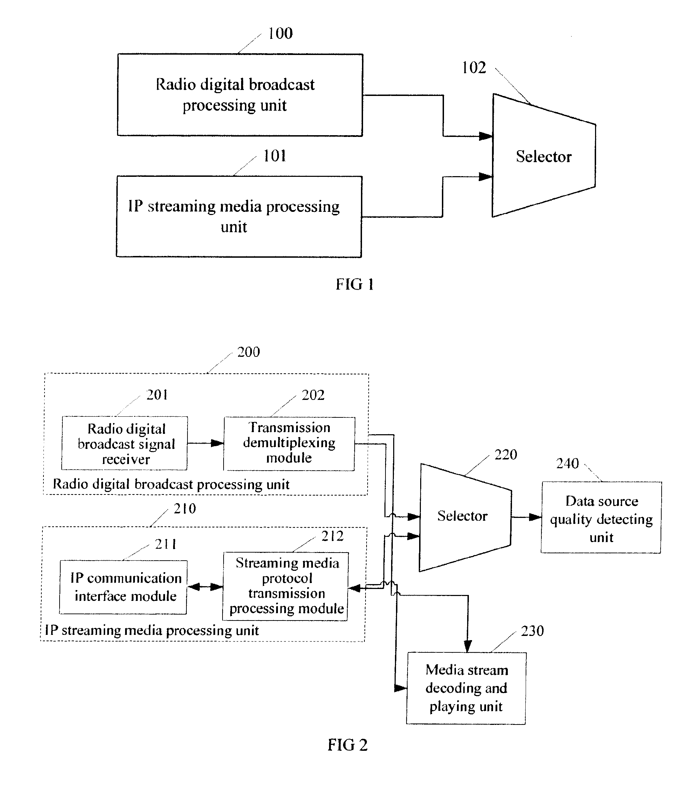

Figure 1 shows a structure of a mobile receiving device in the first exemplary embodiment of the present invention. The mobile receiving device includes a first interface data processing unit 100, a second interface data processing unit 101, and a selector 102. The first interface data processing unit 100 is a radio digital broadcast processing unit 100, and the second interface data processing unit 101 is an IP streaming media processing unit 101.

The radio digital broadcast processing unit 100 extracts the first media stream signal from the first interface. Specifically, the first interface receives radio digital broadcast signals; the radio digital broadcast processing unit 100 extracts the first media stream signal from the radio digital broadcast signals, and sends the first media stream signal to the selector 102.

The IP streaming media processing unit 101 extracts the second media stream signal from the second interface. Specifically, the second interface receives IP-based data stream signals; the IP streaming media processing unit 101 extracts the second media stream signal from the IP-based data stream signals, and sends the second media stream signal to the selector 102.

The selector 102 is adapted to receive the first media stream signal and the second media stream signal respectively from the radio digital broadcast processing unit 100 and the IP streaming media processing unit 101, and select one of the received media stream signals for output.

What has been described above is the embodiment in Figure 1.

Figure 2 shows a structure of a mobile receiving device in the second exemplary embodiment of the present invention. The device includes a first interface data processing unit 200, a second interface data processing unit 210, a selector 220, a data source quality detecting unit 230, and a media stream decoding and playing unit 240. The first interface data processing unit 200 is a radio digital broadcast processing unit 200 and includes a radio digital broadcast signal receiver 201 and a transmission demultiplexing module 202. The second interface data processing unit 210 is an IP streaming media processing unit 210 and includes an IP communication interface module 211 and a streaming media protocol transmission processing module 212.

The radio digital broadcast signal receiver 201 receives a signal from the radio digital broadcast signal source, converts the signal format into the transmission data stream format after noise reduction and recovery, and sends the signal to the transmission demultiplexing module 202.

The transmission demultiplexing module de-multiplexes the signal in the transmission data stream format, extracts the first media stream signal, and sends the firs media stream signal to the selector 220.

The IP communication interface module 211 receives an IP-based data stream signal from the broadband IP network, extracts and recovers the IP-based data stream signal, and sends the processed signal to the streaming media protocol transmission processing unit 212. It should be noted that the IP-based data stream signal includes packets that contain multimedia signals.

The preceding IP communication interface module 211 may be one or more of the following modules: a wireless local area network (WLAN) interface module, a third generation mobile communication system (3G) module, a worldwide interoperability for microwave access (WIMAX) module, and a wireless fidelity (WIFI) interface module. It may also be other interface modules with the functions of the IP communication interface module. The 3G system includes a universal mobile telecommunications system (UMTS), a high speed downlink packet access (HSDPA) system, and a code division multiple access (CDMA) - 2000 evolution (EV) - data optimization (DO) system.

The streaming media protocol transmission processing module 212 performs streaming media protocol processing on the signal received from the communication interface module 211, extracts the second media stream signal, and outputs the second media stream signal to the selector 220.

The data source quality detecting unit 230 receives the first media stream signal and the second media stream signal respectively from the radio digital broadcast processing unit 200 and the IP streaming media processing unit 210, generates a quality indication according to the received signals, and sends the quality indication to the selector 220. It should be noted that the data source quality detecting unit 230 may receive media stream signals from the radio digital broadcast signal receiver 201 and the IP communication interface module 211 or from the transmission demultiplexing module 202 and the streaming media protocol transmission processing module 212.

The selector 220 receives the first media stream signal and the second media stream signal respectively from the transmission demultiplexing module 202 and the streaming media protocol transmission processing module 212, and selects one of the media stream signals for output. The selector 220 may select a media stream signal from the received media stream signals according to the preset playing priority or the quality indication received from the data source quality detecting unit, and outputs the selected media stream signal to the media stream decoding and playing unit 240. The selector 220 provided in this embodiment may be a functional module that is designed by software to implement selection.

The media stream decoding and playing unit 240 receives a media stream signal from the selector 220, and decodes and plays the media stream signal.

It should be noted that the broadband IP network has uplink and downlink service channels in this embodiment. Thus, a signal may be transmitted on a bidirectional basis among the IP communication interface module 211, the streaming media protocol transmission processing module 212, and the selector 220. That is, the user may receive and play a media stream signal from the selector 220, the streaming media protocol transmission processing module 212, and the IP communication interface module 211, or upload the signal to the broadband IP network.

The radio digital broadcast signal source cannot cover the indoor environment, while the broadband IP network can provide a good signal coverage in the indoor environment. In this embodiment, the devices for selecting media streams, that is, the selector 220 and the data source quality detecting unit 230, select a signal with better quality among the media stream signals from the radio digital broadcast signal source and the broadband IP network, and decode and play the signal. Thus, the user can receive media stream signals with better quality in the indoor and outdoor environments.

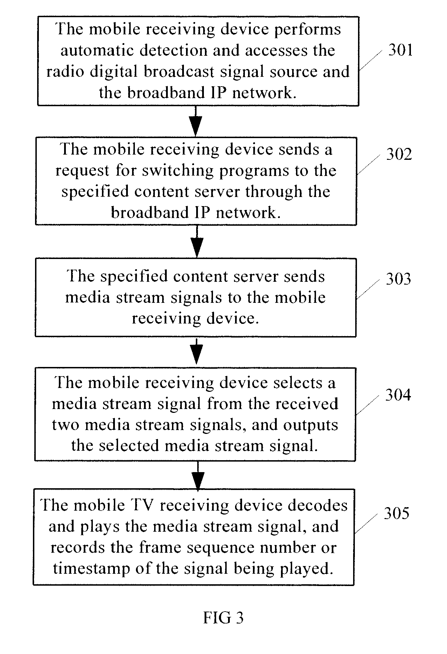

Figure 3 shows a flowchart of a receiving method that is implemented on the mobile receiving device provided in an embodiment of the present invention.

In this embodiment, the mobile receiving device is within the coverage of the radio digital broadcast signal source and the broadband IP network. The receiving method includes the following steps:

Step 301: The mobile receiving device performs automatic detection and accesses the radio digital broadcast signal source and the broadband IP network.

In this embodiment, the mobile receiving device may be a mobile TV receiving device. This embodiment supposes that the mobile receiving device is a mobile TV receiving device. When the mobile TV receiving device is within the coverage of the radio digital broadcast signal source, it can receive radio digital broadcast signals. When entering the coverage area of the broadband IP network, the mobile TV receiving device performs automatic detection, accesses the broadband IP network, and connects to a specified content server. The specified content server stores real-time broadcast program contents.

Step 302: The mobile receiving device sends a request for switching programs to the specified content server through the broadband IP network.

The request includes a specified channel and the time of the current program.

Step 303: The specified content server sends media stream signals to the mobile receiving device.

In this step, the specified content server sends the media stream signals of a channel starting from the time of the current program to the mobile receiving device according to the specified channel and the time of the current program.

Step 304: The mobile receiving device extracts media stream signals from the radio digital broadcast signals and the IP-based data stream signals, and selects a media stream signal for output.

The mobile TV receiving device selects a media stream signal according to the preset playing priority, or generates a quality indication after comparing the received media stream signals, and selects a media stream signal according to the quality indication. For example, if the preset playing priority of the digital broadcast signal source is higher than that of the broadband IP network, the mobile TV receiving device selects and outputs the digital broadcast signals; otherwise, the mobile TV receiving device selects and outputs the IP-based data stream signals. The preceding receiving quality indication refers to packet loss ratio or bit error ratio. If a signal source has a lower packet loss ratio or a lower bit error ratio, the signal source has better quality and is selected by the mobile TV receiving device.

Step 305: The mobile TV receiving device decodes and plays the media stream signal, and records the frame sequence number or timestamp of the signal being played.

The mobile TV receiving device decodes and plays the signal in different modes according to different conditions.

When the mobile TV receiving device accesses the signal source for the first time, it decodes and plays the received signal directly.

When the mobile TV receiving device accesses the signal source once again and the accessed signal source is switched, it decodes and plays, according to the stored frame sequence number or timestamp of the signal before the switching, the signal of the next frame of the same frame sequence number or the next time slice of the same timestamp from the switched signal source.

In step 304, the method for the mobile receiving device to extract the media stream signals from the radio digital broadcast signals includes the following steps:

The mobile receiving device receives radio digital broadcast signals from at least one of the mobile broadcast network, terrestrial digital broadcast network and satellite, and extracts the media stream signals from the received radio digital broadcast signals; or

The mobile receiving device receives radio digital broadcast signals from at least one of the mobile broadcast network, terrestrial digital broadcast network and satellite, and extracts the media stream signals from the received radio digital broadcast signals; the mobile receiving device generates a radio digital broadcast signal quality indication according to the extracted media stream signals; finally, the mobile receiving device selects a signal from the extracted media stream signals according to the radio digital broadcast signal quality indication or the preset radio digital broadcast signal playing priority.

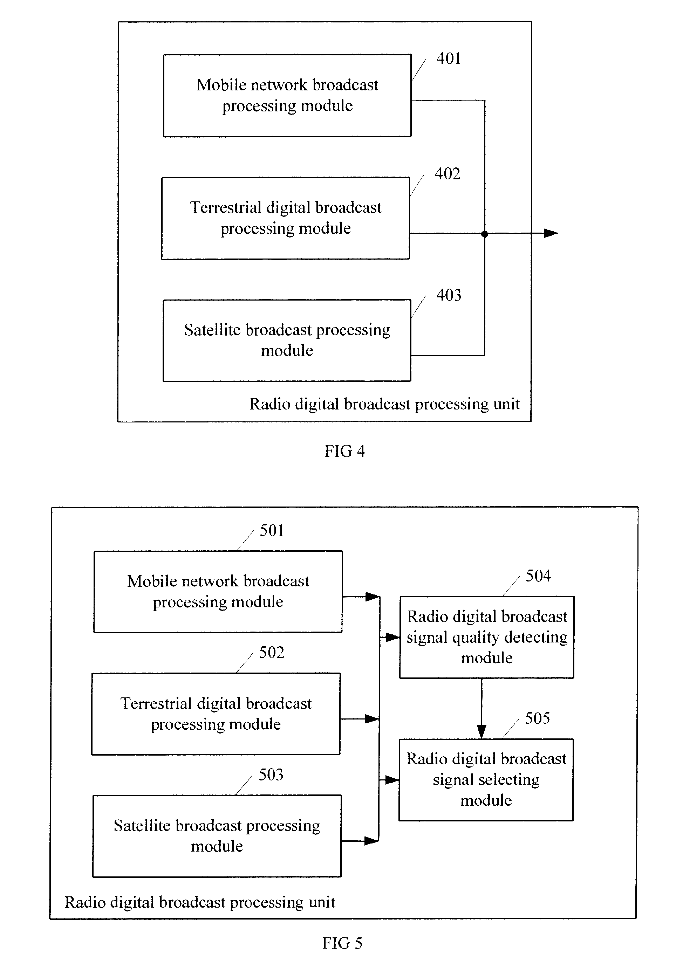

Figure 4 shows a structure of a radio digital broadcast processing unit in an exemplary embodiment of the present invention. As shown in Figure 4, the first interface data processing unit, that is, the radio digital broadcast processing unit, includes:
a mobile network broadcast processing module 401, adapted to receive radio digital broadcast signals from the mobile broadcast network, extract a media stream signal from the radio digital broadcast signals, and send the media stream signal to a selector;
a terrestrial digital broadcast processing module 402, adapted to receive radio digital broadcast signals from the terrestrial digital broadcast network, extract a media stream signal from the received radio digital broadcast signals, and send the media stream signal to the selector; and
a satellite broadcast processing module 403, adapted to receive radio digital broadcast signals from the satellite, extract a media stream signal from the received radio digital broadcast signals, and send the media stream signal to the selector.

In practical applications, the radio digital broadcast processing unit may include at least one of the mobile network broadcast processing module 401, the terrestrial digital broadcast processing module 402, and the satellite broadcast processing module 403. For example, the radio digital broadcast processing unit includes only the mobile network broadcast processing module 401, or includes the terrestrial digital broadcast processing module 402 and the satellite broadcast processing module 403.

What has been described above is the embodiment in Figure 4.

Figure 5 shows a structure of a radio digital broadcast processing unit in another exemplary embodiment of the present invention. As shown in Figure 5, the first interface data processing unit, that is, the radio digital broadcast processing unit, includes: a mobile network broadcast processing module 501, a terrestrial digital broadcast processing module 502, a satellite broadcast processing module 503, a radio digital broadcast signal quality detecting module 504 and a radio digital broadcast signal selecting module 505.

The mobile network broadcast processing module 501 is adapted to receive radio digital broadcast signals from the mobile broadcast network, extract a media stream signal from the radio digital broadcast signals, and send the extracted media stream signal to the radio digital broadcast signal quality detecting module 504 and the radio digital broadcast signal selecting module 505;

The terrestrial digital broadcast processing module 502 is adapted to receive radio digital broadcast signals from the terrestrial digital broadcast network, extract a media stream signal from the received radio digital broadcast signals, and send the extracted media stream signal to the radio digital broadcast signal quality detecting module 504 and the radio digital broadcast signal selecting module 505;

The satellite broadcast processing module 503 is adapted to receive radio digital broadcast signals from the satellite, extract a media stream signal from the received radio digital broadcast signals, and send the extracted media stream signal to the radio digital broadcast signal quality detecting module 504 and the radio digital broadcast signal selecting module 505;

The radio digital broadcast signal quality detecting module 504 is adapted to generate a radio digital broadcast signal quality indication according to the received media stream signals, and send the radio digital broadcast signal quality indication to the radio digital broadcast signal selecting module 505; and

The radio digital broadcast signal selecting module 505 is adapted to select a signal from the received media stream signals and output the signal to the selector according to the radio digital broadcast signal quality indication received by the radio digital broadcast signal quality detecting module 504 or the preset radio digital broadcast signal playing priority.

In practical applications, the radio digital broadcast processing unit may include at lease one of the mobile network broadcast processing module 501, the terrestrial digital broadcast processing module 502, and the satellite broadcast processing module 503. For example, the radio digital broadcast processing unit includes only the mobile network broadcast processing module 501, or includes the terrestrial digital broadcast processing module 502 and the satellite broadcast processing module 503.

What has been described above is the embodiment in Figure 5.

The mobile receiving device, mobile receiving method and device for selecting media streams provided in the embodiments of the present invention select a signal for playing according to the preset playing priority or receiving quality indication. During the switching, the timestamp or frame sequence number is used to ensure the continuity of frames. In addition, the solution provided in the embodiments of the present invention utilizes the existing broadband network resources without network reconstruction, thus reducing network construction costs. The preceding embodiments describe how the mobile receiving device works by taking the mobile TV receiving device as an example. In practical applications, the mobile receiving device may be other mobile multimedia receiving devices that work in the same way as the mobile TV receiving device.

The embodiments described above are only exemplary embodiments, and not intended to limit the scope of protection of the present invention. Any modifications, equivalent alternatives, adaptations, etc., made without departing from the spirit and scope of the invention shall be encompassed within the scope of the invention as claimed.

## Claims

1. A mobile receiving device, comprising:
a first interface data processing unit, adapted to extract a first media stream signal from a first interface;
a second interface data processing unit, adapted to extract a second media stream signal from a second interface; and
a selector, adapted to select one of the first media stream signal and the second media stream signal for output.

2. The device of claim 1, wherein:
the first interface is adapted to receive radio digital broadcast signals;
the second interface is adapted to receive IP-based data stream signals;
the first interface data processing unit is adapted to extract the first media stream signal from the radio digital broadcast signals received by the first interface; and
the second interface data processing unit is adapted to extract the second media stream signal from the IP-based data stream signals received by the second interface.

3. The device of claim 2, wherein the second interface receives the IP-based data stream signals in radio mode.

4. The device of claim 3, further comprising:
a data source quality detecting unit, adapted to generate a receiving quality indication according to the first media stream signal received from the first interface data processing unit and the second media stream signal received from the second interface data processing unit; and
the selector, adapted to select a media stream signal for output according to the receiving quality indication.

5. The device of claim 3 or 4, further comprising:
a media stream decoding and playing unit, adapted to decode and play the selected and output media stream signal.

6. The device of claim 3, wherein the first interface data processing unit comprises:
a radio digital broadcast signal receiver, adapted to convert the radio digital broadcast signals into signals in a transmission data stream format; and
a transmission demultiplexing module, adapted to demultiplex the signals in the transmission data stream format and extract the first media stream signal.

7. The device of claim 3 or 6, wherein the second interface data processing unit comprises:
an IP communication interface module, adapted to receive IP-based data stream signals from the second interface; and
a streaming media protocol transmission processing module, adapted to receive IP-based data stream signals from the IP communication interface module, and perform streaming media protocol processing on the IP-based data stream signals to extract the second media stream signal.

8. The device of claim 3, wherein the first interface data processing unit comprises at least one of the following modules: a mobile network broadcast processing module, a terrestrial digital broadcast processing module, and a satellite broadcast processing module, wherein:
the mobile network broadcast processing module is adapted to receive radio digital broadcast signals from a mobile broadcast network, extract a first media stream signal from the radio digital broadcast signals, and send the first media stream signal to the selector;
the terrestrial digital broadcast processing module is adapted to receive radio digital broadcast signals from a terrestrial digital broadcast network, extract a first media stream signal from the radio digital broadcast signals, and send the first media stream signal to the selector; and
the satellite broadcast processing module is adapted to receive radio digital broadcast signals from a satellite, extract a first media stream signal from the radio digital broadcast signals, and send the first media stream signal to the selector.

9. The device of claim 3, wherein the first interface data processing unit comprises a radio digital broadcast signal quality detecting module, and a radio digital broadcast signal selecting module, in addition to at least one of the following modules: a mobile network broadcast processing module, a terrestrial digital broadcast processing module, and a satellite broadcast processing module, wherein:
the mobile network broadcast processing module is adapted to receive radio digital broadcast signals from a mobile broadcast network, extract a first media stream signal from the radio digital broadcast signals, and send the first media stream signal to the radio digital broadcast signal quality detecting module and the radio digital broadcast signal selecting module;
the terrestrial digital broadcast processing module is adapted to receive radio digital broadcast signals from a terrestrial digital broadcast network, extract a first media stream signal from the radio digital broadcast signals, and send the first media stream signal to the radio digital broadcast signal quality detecting module and the radio digital broadcast signal selecting module;
the satellite broadcast processing module is adapted to receive radio digital broadcast signals from a satellite, extract a first media stream signal from the radio digital broadcast signals, and send the first media stream signal to the radio digital broadcast signal quality detecting module and the radio digital broadcast signal selecting module;
the radio digital broadcast signal quality detecting module is adapted to generate a radio digital broadcast signal quality indication according to the received first media stream signals, and send the radio digital broadcast signal quality indication to the radio digital broadcast signal selecting module; and
the radio digital broadcast signal selecting module is adapted to select one of the received first media stream signals and output the signal to the selector according to the radio digital broadcast signal quality indication or a preset radio digital broadcast signal playing priority.

10. The device of claim 1 or 3, wherein the second interface data processing unit comprises at least one of the following units: a wireless fidelity (WIFI) interface module, a worldwide interoperability for microwave access (WIMAX) module, and a third generation (3G) mobile communication module.

11. A mobile receiving method, comprising:
extracting a first media stream signal from radio digital broadcast signals and a second media stream signal from IP-based data stream signals; and
selecting one of the extracted media stream signals for output.

12. The method of claim 11, further comprising:
performing, by a mobile receiving device, automatic detection, and accessing a radio digital broadcast signal source and a broadband IP network.

13. The method of claim 11, wherein the process of selecting one of the extracted media stream signals for output comprises:
selecting, by a mobile receiving device, a media stream signal from the extracted multimedia stream signals for output according to a preset playing priority; or
generating a receiving quality indication according to the extracted media stream signals, and selecting a media stream signal from the extracted media stream signals for output according to the receiving quality indication.

14. The method of claim 13, wherein selecting one of the media stream signals according to the receiving quality indication,
the receiving quality indication is a packet loss ratio or a bit error ratio.

15. The method of claim 11, further comprising:
sending, by a mobile receiving device, a request for watching programs to a specified content server;
receiving, by the mobile receiving device, IP-based data stream signals sent by the specified content server.

16. The method of any one of claims 11, 12, 13, 14 and 15, further comprising:
storing, by the mobile receiving device, a frame sequence number or a timestamp of the media stream signals played before selecting the media stream signals for output; and
decoding and playing, by the mobile receiving device, a next frame of the frame sequence number or next time slice of the timestamp.

17. The method of claim 11, wherein the processes of extracting the first media stream signal from the radio digital broadcast signals comprises:
receiving the radio digital broadcast signals from at least one of a mobile broadcast network, a terrestrial digital broadcast network and a satellite, and extracting the first media stream signal from the received radio digital broadcast signals.

18. The method of claim 11, wherein the processes of extracting the first media stream signal from the radio digital broadcast signals comprises:
receiving the radio digital broadcast signals from at least one of a mobile broadcast network, a terrestrial digital broadcast network and a satellite, and extracting the first media stream signal from the received radio digital broadcast signals;
generating a radio digital broadcast signal quality indication according to the extracted first media stream signals; and
selecting a first media stream signal according to the radio digital broadcast signal quality indication or a preset radio digital broadcast signal playing priority.

19. A device for selecting media streams, comprising:
a selector, adapted to receive a first media stream signal extracted from radio digital broadcast signals and a second media stream signal extracted from IP-based data stream signals, and select a media stream signal for output.

20. The device of claim 19, further comprising:
a data source quality detecting unit, adapted to receive the first media stream signal extracted from the radio digital broadcast signals and the second media stream signal extracted from the IP-based data stream signals, and generate a quality indication according to the received media stream signals; and
the selector, adapted to select a media stream signal for output according to the receiving quality indication.
